(19) Europäisches Patentamt
European Patent Office
Office européen des brevets

(11) **EP 4 145 378 A1**

(12) **EUROPEAN PATENT APPLICATION**
published in accordance with Art. 153(4) EPC

(43) Date of publication:
**08.03.2023 Bulletin 2023/10**

(21) Application number: **20933904.3**

(22) Date of filing: **27.04.2020**

(51) International Patent Classification (IPC):
*G06Q 50/10* *(2012.01)*

(52) Cooperative Patent Classification (CPC):
**G06Q 50/10**

(86) International application number:
**PCT/JP2020/017931**

(87) International publication number:
**WO 2021/220330 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **GYOTA Tomoaki
Tokyo 100-8310 (JP)**

(74) Representative: **Studio Torta S.p.A.
Via Viotti, 9
10121 Torino (IT)**

(54) **DATA COLLECTION DEVICE, REMOTE CONTROL SYSTEM, DATA COLLECTION METHOD, AND PROGRAM**

(57) A collector (101) collects operation data indicating an operation status of a facility device system. An operation data storage (102) stores the operation data. An evaluator (103) calculates an evaluation value indicating an evaluation of the collected operation data based on a comparison between the collected operation data and the stored operation data. A determiner (104) determines, based on the evaluation value, compensation for provision of the collected operation data. A presenter (105) presents the determined compensation to a provider of the collected operation data.

**FIG. 3**

EP 4 145 378 A1

**Description**

Technical Field

The present disclosure relates to a data collection apparatus, a remote control system, a data collection method, and a program.

Background Art

Services are known for control, maintenance, or the like of, through a remote operation, a facility device system including facility devices arranged in a real-estate property such as an office building and a commerce facility. In such services, data is collected from systems to which the service is provided, and processing such as control and maintenance is executed by utilizing an analysis result of the collected data. For example, Patent Literature 1 discloses a technique in which (i) a centralized management center that collects operation information of air conditioners determines whether maintenance is necessary based on the operation information collected thereby and (ii) a service provider performs maintenance of the air conditioners based on information that is received from the centralized management center and that relates to necessity of maintenance.

Citation List

Patent Literature

Patent Literature 1: Unexamined Japanese Patent Application Publication No. 2001-357113

Summary of Invention

Technical Problem

In order to provide a high-quality service with respect of control, maintenance, or the like, collecting from multiple systems a wide variety of types of data of operations of the systems, device models of facility devices, or the like, is important. Collecting a wide variety of types of data comprehensively and analyzing the wide variety of types of data enable more advanced control, a more accurate malfunction diagnosis, or the like. However, conventional techniques such as the aforementioned technique are not devised for efficiently collecting a wide variety of types of data.
The present disclosure is made in view of the aforementioned circumstances, and an objective of the present disclosure is to provide a data collection apparatus, a remote control system, a data collection method, and a program that enable efficiently collecting a wide variety of types of data from a facility device system.

Solution to Problem

To achieve the aforementioned objective, a data collection apparatus according to the present disclosure includes collection means for collecting operation data indicating an operation status of a facility device system, storage means for storing the operation data, evaluation means for calculating an evaluation value indicating an evaluation of the collected operation data based on a comparison between the collected operation data and the stored operation data, determination means for determining compensation for provision of the collected operation data based on the evaluation value, and presentation means for presenting the determined compensation to a provider of the collected operation data.

Advantageous Effects of Invention

According to the present disclosure, a data collection apparatus, a remote control system, a data collection method, and a program that enable efficiently collecting a wide variety of types of data from a facility device system can be provided.

Brief Description of Drawings

FIG. 1 is a block diagram of a remote control system according to Embodiment 1;
FIG. 2 is a block diagram illustrating hardware configuration of a data collection apparatus and a control apparatus according to Embodiment 1;

FIG. 3 is a block diagram illustrating functional configuration of the data collection apparatus and the control apparatus according to Embodiment 1;

FIG. 4 illustrates an example of operation data according to Embodiment 1;

FIG. 5 illustrates an example of a distribution of operating times according to Embodiment 1;

FIG. 6 illustrates an example of utilization data according to Embodiment 1;

FIG. 7 illustrates an example of an image including information relating to remote control according to Embodiment 1;

FIG. 8 is a flowchart of data collection processing executed by the data collection apparatus according to Embodiment 1;

FIG. 9 is a flowchart of control processing executed by the control apparatus according to Embodiment 1;

FIG. 10 is a block diagram illustrating functional configuration of a data collection apparatus and a control apparatus according to Embodiment 2;

FIG. 11 illustrates an example of additional data according to Embodiment 2; and

FIG. 12 is a flowchart of data collection processing executed by the data collection apparatus according to Embodiment 2.

Description of Embodiments

Embodiment 1

A remote control system 1 according to Embodiment 1 is a system that performs remote control of a facility device system constructed in a real-estate property. The facility device system is, for example, an air conditioning system that controls air conditioners, an illumination system that controls illumination devices, or a system that controls elevators. In the explanation below, the facility device system is taken to be an air conditioning system.

A manager of the remote control system 1 is taken to be a provider of a service for air conditioners such as automatic control, maintenance, or the like of the air conditioners, and is taken to have a contract for providing the service with an owner or a manager of an air conditioning system 300.

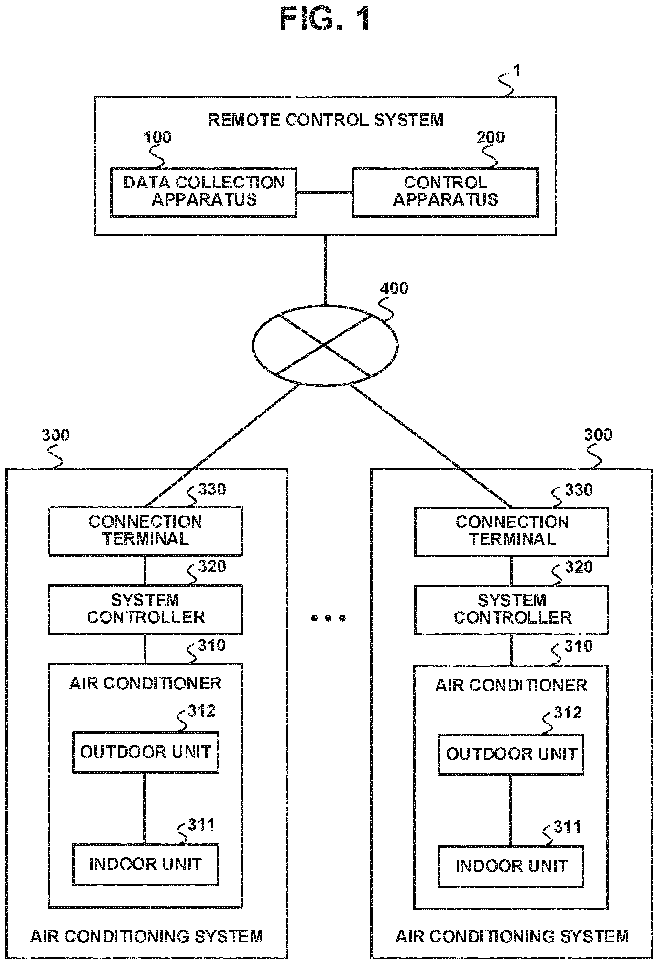

As illustrated in FIG. 1, the remote control system 1 includes a data collection apparatus 100 that collects operation data of facility device systems and a control apparatus 200 that performs remote control of facility devices based on the collected operation data. The data collection apparatus 100 and the control apparatus 200 are mutually connected via a non-illustrated network.

The data collection apparatus 100 is connected to a plurality of the air conditioning systems 300 via a network. The air conditioning systems 300 are taken to be arranged in mutually different real-estate properties. Each of the real-estate properties is, for example, an office, a commerce facility, or an apartment house. The data collection apparatus 100 collects the operation data from the air conditioning systems 300.

The control apparatus 200 performs remote control of the air conditioning systems 300 based on the operation data collected by the data collection apparatus 100. The remote control is, for example, automatic control of air conditioners included in the air conditioning systems 300, or a malfunction diagnosis of the air conditioning systems 300.

Each of the air conditioning systems 300 includes an air conditioner 310, a system controller 320, and a connection terminal 330.

The air conditioner 310 includes one or more indoor units 311 and one or more outdoor units 312. The one or more indoor units 311 are arranged to the interior of an air-conditioning target space whereas the one or more outdoor units 312 are arranged to the exterior of the air-conditioning target space. Each of the one or more indoor units 311 and the one or more outdoor units 312 includes a sensor for measuring a temperature, a pressure, or the like.

The system controller 320 is a device that controls operation of the air conditioner 310. The system controller 320 is communicable with the one or more indoor units 311 and the one or more outdoor units 312 via wireless communication or wired communication. The system controller 320 acquires the operation data that includes values set for the one or more indoor units 311 and the one or more outdoor units 312, values measured by the sensors included in the one or more indoor units 311 and the one or more outdoor units 312, and the like.

The connection terminal 330 is connected to the data collection apparatus 100 via a network 400. Further, the connection terminal 330 is communicable with the system controller 320 via wireless communication or wired communication. The connection terminal 330 acquires the operation data from the system controller 320 and transmits the acquired operation data to the data collection apparatus 100.

The network 400 is a wireless or wired communication network such as the Internet, an intranet, an extranet, a local area network (LAN), a virtual private network (VPN), and a telephone network.

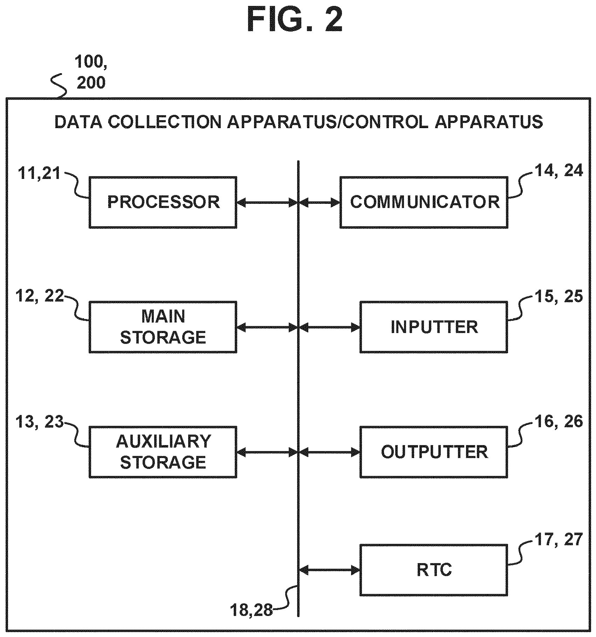

Next, hardware configuration of the data collection apparatus 100 and the control apparatus 200 is described with reference to FIG. 2. The data collection apparatus 100 includes a processor 11 that executes processing for collecting data, a main storage 12 that is used by the processor 11 as a work area, an auxiliary storage 13 that stores various types of data used for processing by the processor 11, a communicator 14 for communication with an external device, an inputter 15 that acquires inputted information, an outputter 16 that presents various types of information, and a real time clock (RTC) 17 that performs clocking. The main storage 12, the auxiliary storage 13, the communicator 14, the inputter 15, the outputter 16, and the RTC 17, are each connected to the processor 11 via a bus 18.

The processor 11 includes a central processing unit (CPU). The processor 11 executes a program stored in the auxiliary storage 13, thereby achieving various functions of the data collection apparatus 100.

The main storage 12 includes a random access memory (RAM). The program is loaded from the auxiliary storage 13 into the main storage 12. The main storage 12 is used by the processor 11 as a work area.

The auxiliary storage 13 includes a nonvolatile memory such as an electrically erasable programmable read-only memory (EEPROM). The auxiliary storage 13 stores the program and various types of data used for processing by the processor 11. The auxiliary storage 13 supplies, in accordance with instructions from the processor 11, to the processor 11 data to be used by the processor 11, and stores data supplied from the processor 11.

The communicator 14 includes a network interface circuit for communication with an external device. The communicator 14 receives a signal from the external device and outputs to the processor 11 data indicated by the signal. Further, the communicator 14 transmits to the external device a signal indicating data outputted from the processor 11.

The inputter 15 includes an input device such as input keys and a pointing device. The inputter 15 acquires information inputted by a user of the data collection apparatus 100 and sends the acquired information to the processor 11.

The outputter 16 includes an output device such as a liquid crystal display (LCD) and a speaker. The outputter 16 may be included in a touch screen that is formed integrally with a pointing device included in the inputter 15. The outputter 16 presents various types of information to the user in accordance with instructions from the processor 11.

The RTC 17 is a device for clocking that includes an oscillator circuit achieved by a crystal oscillator. The RTC 17 has, for example, a built-in battery, to continue clocking even during power-off of the data collection apparatus 100.

Next, hardware configuration of the control apparatus 200 is described with reference to FIG. 2. The control apparatus 200 includes a processor 21 that executes remote control processing, a main storage 22 that is used by the processor 21 as a work area, an auxiliary storage 23 that stores various types of data used for processing by the processor 21, a communicator 24 for communication with an external device, an inputter 25 that acquires inputted information, an outputter 26 that presents various types of information, and an RTC 27 that performs clocking. The main storage 22, the auxiliary storage 23, the communicator 24, the inputter 25, the outputter 26, and the RTC 27 are each connected to the processor 21 via a bus 28.

The processor 21, the main storage 22, the auxiliary storage 23, the communicator 24, the inputter 25, the outputter 26, and the RTC 27 have respective functions that are similar to those of the processor 11, the main storage 12, the auxiliary storage 13, the communicator 14, the inputter 15, the outputter 16, and the RTC 17.

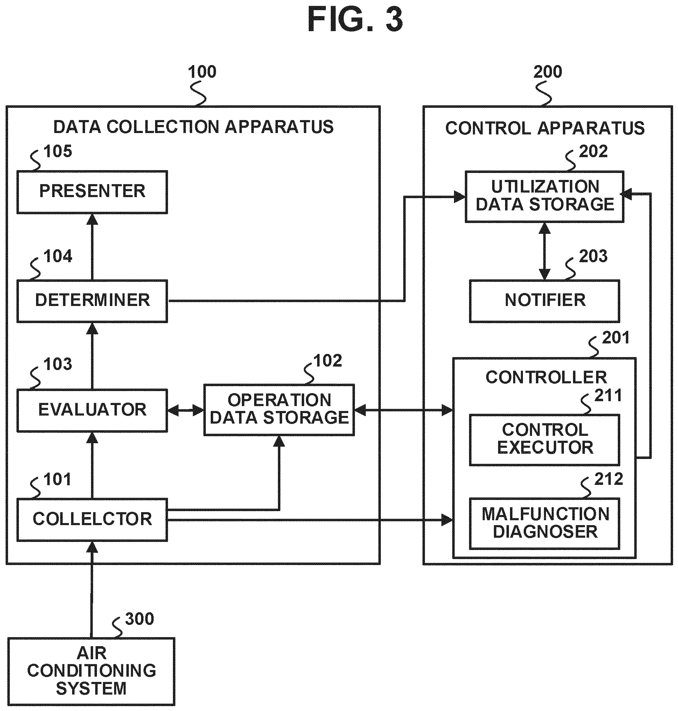

Next, functions of the data collection apparatus 100 and the control apparatus 200 are described with reference to FIG. 3. First, the functions of the data collection apparatus 100 are described. The data collection apparatus 100 functionally includes a collector 101 that collects the operation data from each of the air conditioning systems 300, an operation data storage 102 that stores the operation data, an evaluator 103 that calculates an evaluation value indicating an evaluation of the operation data, a determiner 104 that determines compensation for provision of the operation data based on the evaluation value, and a presenter 105 that presents the determined compensation.

The collector 101 collects the operation data indicating an operation status of the air conditioning system 300. The collector 101 is achieved by cooperation between the processor 11 and the communicator 14. The collector 101 is an example of collection means.

The operation data is data indicating the operation status of the air conditioning system 300. The operation data includes dynamic data that changes over time and static data that remains static over time. The dynamic data is, for example, information relating to (i) a remote-controller set value such as a temperature setting, a wind direction, and a wind velocity, (ii) a value of the sensor included in the air conditioner 310, and (iii) an operating time, an operation mode, presence/absence of abnormality, and content of control of the air conditioner 310. The static data is, for example, information of a device model of the air conditioner 310 and information of a system scale of the air conditioning system 300. The information of the system scale is, for example, information of a number of the indoor units 311 included in the air conditioning system 300 and a number of the outdoor units 312 included in the air conditioning system 300. In the present embodiment, the dynamic data included in the operation data is taken to be time-series data at one-minute intervals.

The collector 101 collects the operation data from each of the air conditioning systems 300, for example, periodically at one-hour intervals. That is to say, the collector 101 collects, together every one hour, the operation data including the time-series data at one-minute intervals. The intervals at which the collection is performed are freely determined by a manager of the data collection apparatus 100. The static data included in the operation data is not necessarily collected periodically and may be collected just at predetermined timings. For example, the collector 101 may collect the static data at a time of startup of the air conditioner 310.

The collector 101 transmits the collected operation data to the control apparatus 200 that is described later.

Further, the collector 101 registers the collected operation data in the operation data storage 102 after the evaluator 103 that is described later calculates the evaluation value for the collected operation data.

The operation data storage 102 stores the operation data of each of the air conditioning systems 300 to which a service of remote control is provided by the remote control system 1. The operation data storage 102 is achieved by the auxiliary storage 13. The operation data storage 102 is an example of storage means.

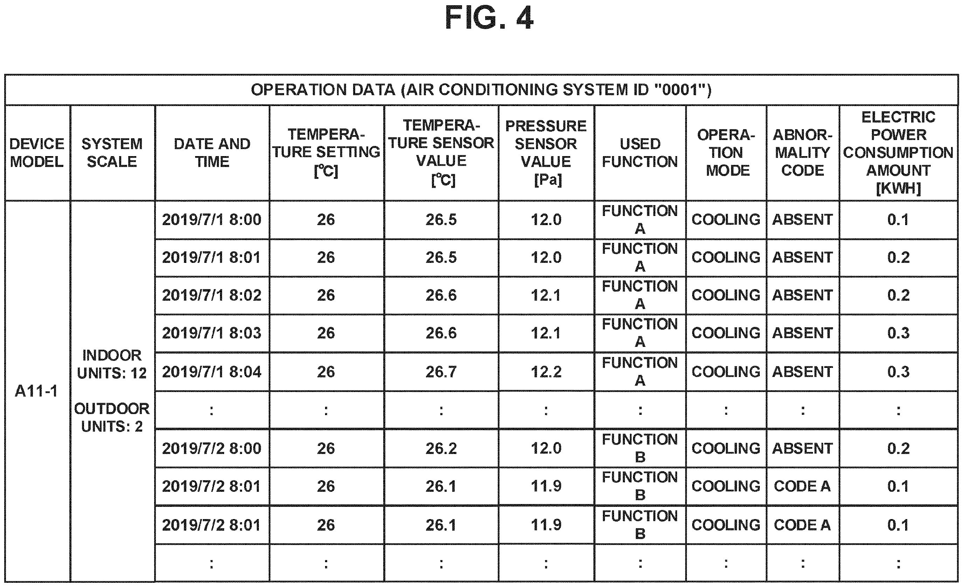

FIG. 4 illustrates an example of the operation data stored in the operation data storage 102. The table of FIG. 4 is taken to indicate, for example, the operation data collected from the air conditioning system 300 constructed in a real-estate property A. The air conditioning system 300 constructed in the real-estate property A is taken to be assigned the air conditioning system ID "0001". The operation data storage 102 stores, for each of the air conditioning systems 300, a table of the operation data as illustrated in FIG. 4. In the table of FIG. 4, a device model of the air conditioner 310 included in an air conditioning system 300, a system scale of the air conditioning system 300, date and time of measurement of the dynamic data of the operation data, a temperature setting for the air conditioner 310, a temperature sensor value measured by a temperature sensor of the one or more indoor units 311, a pressure sensor value measured by a pressure sensor of the one or more outdoor units 312, a used function used in the air conditioning system 300, an abnormality code indicating content of an abnormality occurring in the air conditioning system 300, an operation mode of the air conditioner 310, and an electric power consumption amount of the air conditioner 310, are registered in association with one another.

The temperature sensor value is, for example, an inlet temperature that is a temperature of air drawn through an inlet of the one or more the indoor units 311. The pressure sensor value is, for example, a value of a pressure of a refrigerant flowing through piping of the one or more outdoor units 312.

The used function is a function relating to control of the air conditioner 310 of the air conditioning system 300 and is a function that enables achievement of energy conservation. For example, "normal" indicates a control state in which no special control for achievement of energy conservation is performed. The "function A" indicates, for example, evaporation temperature control that is control of a temperature in an evaporator for suppressing electric power consumption in response to approach to a set temperature. The "function B" indicates, for example, rotation control that is control in which multiple indoor units 311 are regarded as one group and operations of the indoor units of the group are sequentially switched such that at least one indoor unit of the indoor units of the group operates to suppress electric power consumption by, for example, stopping operation or performing ventilation.

The abnormality code is a code associated with content of an abnormality that may possibly occur in the air conditioning system 300. Here "absent" as the abnormality code indicates that no abnormality occurs in the air conditioning system 300. The "code A" indicates, for example, leakage of refrigerant in the one or more outdoor units 312.

The electric power consumption amount indicates an amount of electric power consumed by the air conditioner 310 during a predetermined unit period. In the present embodiment, the unit period is one minute, and the electric power consumption amount in the present embodiment is an electric power amount measured in one minute immediately before the date and time of collection of the operation data.

The record in the first line of the table of FIG. 4 indicates that the device model of the air conditioner 310 included in the air conditioning system 300 corresponding to the air conditioning system ID "0001" is "A1 1-1", this air conditioning system 300 includes "twelve indoor units and two outdoor units", the dynamic data of the operation data has been measured at "8:00 on July 1, 2019", the temperature setting for the air conditioner 310 is "26 °C", the temperature sensor value is "26.5 °C", the pressure sensor value is "12.0 Pa", the used function is "function A", the operation mode is "cooling", presence/absence of an abnormality is "absent", and the electric power consumption amount is "0.1 kWh".

The evaluator 103 of FIG. 3 calculates the evaluation value indicating an evaluation of the collected operation data based on a comparison between the collected operation data and the stored operation data. The evaluator 103 is achieved by the processor 11. The evaluator 103 is an example of evaluation means.

The evaluation of the operation data is freely determined by the manager of the remote control system 1, for example, by the determination method "the evaluation of the operation data is higher as a degree to which the manager desires to acquire the operation data" is higher. In the present embodiment, (i) as rarity of operation data is higher, that is, as an amount of the operation data stored in the operation data storage 102 is smaller, a degree to which the manager desires to acquire operation data of the same type as the operation data is taken to be higher, and (ii) such operation data is taken to have a high evaluation. For example, a distribution of the operation data is obtained with respect to a predetermined evaluation item, and operation data belonging to the same class are regarded as being of the same type.

The evaluator 103 obtains a distribution of the stored operation data with respect to the predetermined evaluation item, and calculates for the collected operation data an evaluation value that is higher as an amount of the operation data included in the class of the obtained distribution to which the collected operation data belongs is smaller. The amount of the operation data is represented by, for example, a data amount such as a number of samples or bytes. Hereinafter, the amount of the stored operation data is called the "accumulation amount", and the accumulation amount is represented by the number of samples.

A method performed by the evaluator 103 for calculating the evaluation value is specifically described. The evaluator 103 firstly obtains, for the collected operation data, values with respect to predetermined evaluation items. The evaluation items are, for example, the operating time, the device model, the system scale, the abnormality code, and the used function.

If the collector 101 is taken to have collected from the air conditioning system 300 corresponding to the air conditioning system ID "0001" the operation data from 8:00 to 9:00 on March 7, 2020, the evaluator 103 obtains, with respect to the evaluation item "operating time", an accumulated operating time from the date and time of construction of the air conditioning system 300 corresponding to the air conditioning system ID "0001" to 9:00 on March 7, 2020. With respect to the evaluation item "device model", the evaluator 103 obtains a device model number indicating a device model of the air conditioner 310 included in the air conditioning system 300 corresponding to the air conditioning system ID "0001". With respect to the evaluation item "system scale", the evaluator 103 obtains a number of the one or more indoor units 311 included in the air conditioning system 300 corresponding to the air conditioning system ID "0001" and a number of the one or more outdoor units 312 included in the air conditioning system 300 corresponding to the air conditioning system ID "0001". With respect to the evaluation item "abnormality code", the evaluator 103 obtains an abnormality code included in the operation data from 8:00 to 9:00 on March 7, 2020. With respect to the evaluation item "used function", the evaluator 103 obtains a value of a used function included in the operation data from 8:00 to 9:00 on March 7, 2020.

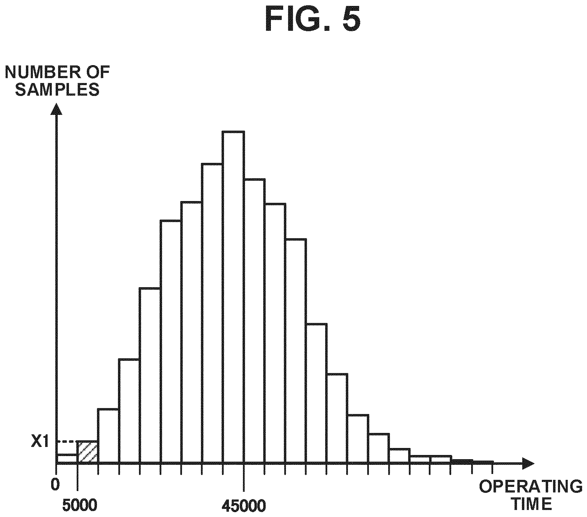

Then the evaluator 103 obtains distributions of the operation data of the other air conditioning systems 300 stored in the operation data storage 102 with respect to the evaluation items. For example, with respect to the evaluation item "operating time", the evaluator 103 obtains operating times of the other air conditioning systems 300 and obtains a histogram as illustrated in FIG. 5 in which classes are set based on the operating time. In the histogram of FIG. 5, one class is set for every 5,000 hour period. If the operating time obtained for the air conditioning system 300 corresponding to the air conditioning system ID "0001" is taken to be "6,000 hours", the evaluator 103 (i) determines that the operating time of the air conditioning system 300 corresponding to the air conditioning system ID "0001" belongs to the class of 5,000-10,000 hours in the histogram of FIG. 5, that is, the rectangle marked with diagonal lines in FIG. 5, and (ii) obtains a sample number X1 that is a number of samples belonging to the class of 5,000-10,000 hours. Further, the evaluator 103 obtains a sample number Y1 that is a number of samples included in all of the classes in the histogram of FIG. 5. Similarly, for each of the other evaluation items, the evaluator 103 obtains a histogram and then obtains (i) a sample number $X_i$ (i is 1~ n, where n is a number of the evaluation items) that is a number of samples in the class to which the collected operation data belongs and (ii) a sample number $Y_i$ that is a number of samples in all classes.

Then the evaluator 103 calculates, for each of the evaluation items, an evaluation value i based on Formula 1 below.

$$\text{Evaluation value i} = 1.0 - X_i/Y_i \cdots \text{(Formula 1)}$$

The evaluation value obtained by Formula 1 above is closer to 1 as the number of samples in the class to which the collected operation data belongs is smaller. That is to say, the evaluation value obtained for the collected operation data is higher as the accumulation amount of the operation data that can be deemed as being of the same type as the collected operation data is smaller.

The determiner 104 determines, based on the evaluation values, compensation for provision of the collected operation data. The determiner 104 is achieved by the processor 11. The determiner 104 is an example of determination means.

The compensation is a reward given for a provider of the collected operation data as a reward for the provision. The provider of the operation data is typically an owner of the air conditioning system 300 that receives a remote control service. In the explanation below, the compensation is taken to be an evaluation point that can be used to discount a service utilization charge for the remote control system. The evaluation point is, for example, an average value of the evaluation values i obtained for the evaluation items. Upon determining the evaluation point based on the average value of the evaluation values i, the determiner 104 registers the determined point in a table stored in a utilization data storage 202 of the control apparatus 200 that is described later.

The presenter 105 presents the determined compensation to the provider of the collected operation data. The presenter 105 is achieved by the processor 11. The presenter 105 is an example of presentation means.

If, for example, the operation data from 8:00 to 9:00 on March 7, 2020, is collected from the air conditioning system 300 corresponding to the air conditioning system ID "0001", the presenter 105 sends, to the connection terminal 330 in the air conditioning system 300 corresponding to the air conditioning system ID "0001", a message including a value of the evaluation point.

Next, functions of the control apparatus 200 are described with reference to FIG. 3. The control apparatus 200 includes a controller 201 that executes remote control, a utilization data storage 202 that stores information relating to utilization of the remote control, and a notifier 203 that sends notification of information relating to the remote control.

The controller 201 executes remote control of the air conditioning systems 300 based on the collected operation data. The controller 201 is achieved by cooperation between the processor 21 and the communicator 24. The controller 201 is an example of control means.

The controller 201 includes a control executor 211 that executes control of the air conditioners 310 of the air conditioning systems 300, and a malfunction diagnoser 212 that performs a malfunction diagnosis of the air conditioning systems 300. The control executor 211, for example, predicts a demand electric power of the next day based on the operation data stored in the operation data storage 102 and executes control for electric-load leveling based on the predicted demand electric power and the collected operation data. The malfunction diagnoser 212, for example, diagnoses that a sign of malfunction is found in response to a high similarity between (i) the collected operation data and (ii) the operation data that is from other real-estate properties in which a malfunction occurs previously and that is data before occurrence of the malfunction.

Further, the controller 201 registers, in the utilization data storage 202, information of a time at which the service of the remote control is provided.

The utilization data storage 202 stores utilization data relating to the service for the multiple air conditioning systems 300. The utilization data storage 202 is achieved by the auxiliary storage 23.

The utilization data is data indicating statuses of utilization of the service by the air conditioning systems 300. The utilization data includes, for example, a utilization time of the service, a utilization charge for the service, and the evaluation point.

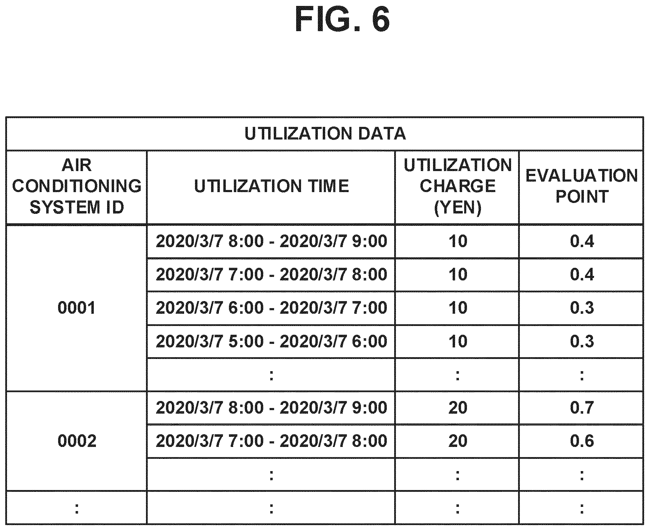

FIG. 6 illustrates an example of the utilization data stored in the utilization data storage 202. In the table of FIG. 6, an air conditioning system ID for identification of the air conditioning system 300, a utilization time that is a time spent to utilize the service, a charge required for utilization of the service for the utilization time, and the evaluation point obtained for the operation data collected in the utilization time are registered in association with one another. The evaluation point is a value registered by the determiner 104.

The first line of the table of FIG. 6 indicates that the air conditioning system 300 corresponding to the air conditioning system ID "0001" has utilized the remote control service from 8:00 on March 7, 2020 to 9:00 on March 7, 2020, the charge for utilization of the service during this period is "10 yen", and the evaluation point given for provision of the operation data collected during this period is "0.4".

The notifier 203 sends, to the provider of the operation data, notification of the information relating to the remote control. The notifier 203 is achieved by cooperation between the processor 21 and the communicator 24. The notifier 203 is an example of notification means.

The information relating to the remote control is, for example, information relating to the content of control executed by the control executor 211 and a result of the malfunction diagnosis. Further, the information relating to the remote control includes a value of cost that is required for execution of the remote control and that is obtained with reference to compensation for provision of data. The value of cost that is required for execution of the remote control and that is obtained with reference to compensation is, for example, a value of a billing amount obtained by deducting the evaluation point from the service utilization charge. The notifier 203 obtains the billing amount with reference to the items of the utilization charge and the evaluation point in the table of FIG. 6 that is stored in the utilization data storage 202. The billing amount is taken to be obtained by, for example, subtracting, from a utilization charge per the utilization time, a value obtained by multiplying the evaluation point by a predetermined price. For example, in the case in which the predetermined price is "10 yen", the billing amount for the air conditioning system 300 corresponding to the air conditioning system ID "0001" for the period "from 8:00 on March 7, 2020 to 9:00 on March 7, 2020" is obtained by "10 (yen) - 0.4 $\times$ 10 (yen) = 6 (yen)".

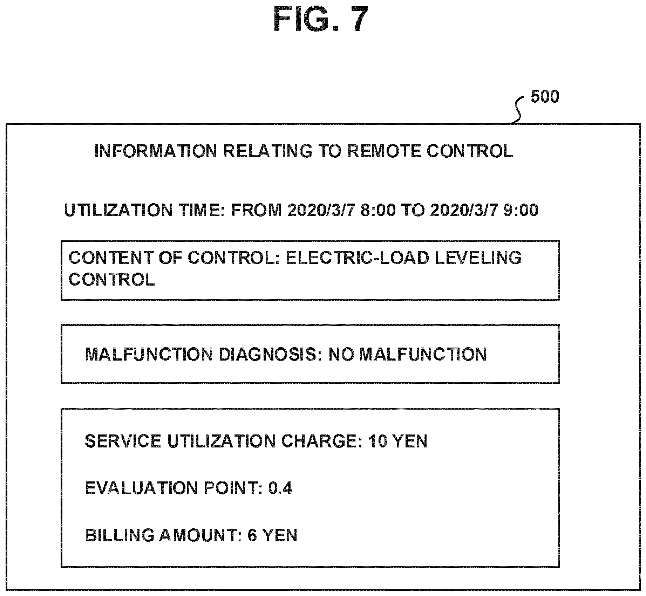

FIG. 7 illustrates an example of the information relating to the remote information of which notification is sent by the notifier 203. Upon the notifier 203 transmitting the information relating to the remote information to, for example, the connection terminal 330 of the air conditioning system 300 from which the operation data is collected, the image 500 of FIG. 7 is displayed on a screen included in the system controller 320.

Next, processing executed by the data collection apparatus 100 and the control apparatus 200 of the remote control system 1 according to the present embodiment is described with reference to flowcharts.

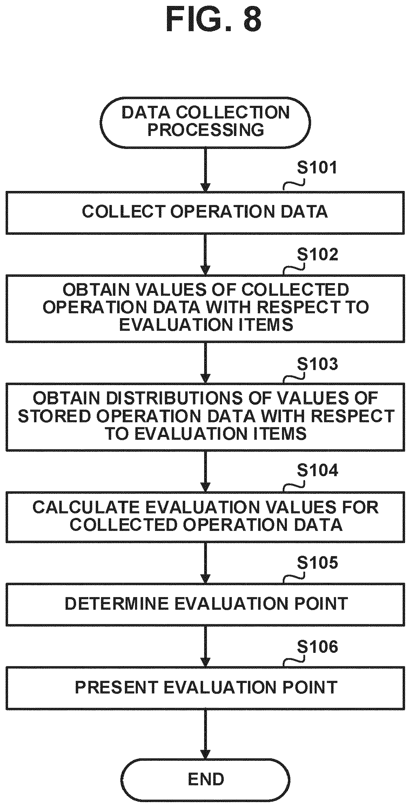

First, data collection processing executed by the data collection apparatus 100 is described with reference to the flowchart of FIG. 8. The data collection apparatus 100 executes, for example, the data collection processing of FIG. 8 in a one-hour period.

The collector 101 collects the operation data from the air conditioning system 300 (step S101). The evaluator 103 obtains a value of the collected operation data with respect to a predetermined evaluation item (step S102). Then the evaluator 103 obtains a distribution of the operation data of the air conditioning system 300 stored in the operation data storage 102 with respect to the evaluation item (step S103). Then the evaluator 103 calculates an evaluation value based on a class of the distribution of the stored operation data with respect to the evaluation item to which the value of the collected operation data with respect to the evaluation item belongs (step S104).

The determiner 104 determines an evaluation point based on the evaluation value (step S105). The presenter 105 presents the determined point to the provider of the collected operation data (step S106).

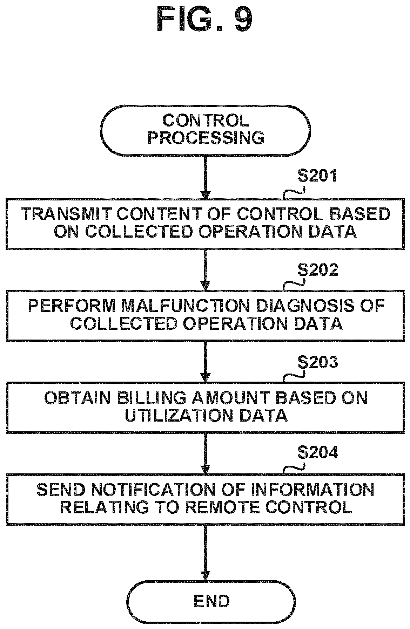

Next, control processing executed by the control apparatus 200 is described with reference to the flowchart of FIG. 9. The data control apparatus 200 executes, for example, the control processing of FIG. 9 in a one-hour period upon ending of the data collection processing by the data collection apparatus 100.

The control executor 211 transmits, based on the collected operation data, to the air conditioning system 300, information indicating content of control in the next period (step S201). The malfunction diagnoser 212 performs a malfunction diagnosis of the collected operation data (step S202).

The notifier 203 obtains the billing amount per the utilization time based on the utilization data stored in the utilization data storage 202 (step S203). Then the notifier 203 sends, to the provider of the operation data, notification of the information relating to the remote control and including the billing amount (step S204).

According to the present embodiment, compensation for provision of the collected operation data is determined based on an evaluation of the collected operation data, and the determined compensation is presented to the provider of the collected operation data. This enables prompting of the provision of the operation data, enabling prompt collection of a wide variety of types of data. Further, high compensation is determined for data that the manager of the remote control system desires to acquire whereas low compensation is determined for data for which acquisition is not as much desired by the manager, thereby enabling cost that is lower than in a case in which fixed compensation is given for any data collection. Thus, according to the present embodiment, collection of a wide variety of types of data that is efficient in view of time and cost can be performed.

For example, in a case in which data is evaluated to have an evaluation that is higher as the accumulation amount of the operation data in the remote control system is smaller, high compensation is paid for provision of data during a period shortly after the start of operation of the remote control system, since the amount of data accumulated in the remoted control system is small during this period. In contrast, after the amount of accumulated data is large through operation by the remote control system for a long period of time after the start of operation, low compensation is paid for provision of data. This configuration enables prompting a customer who enjoys a service of the remote control system to provide data during a period shortly after the start of operation of the remote control system, thus enabling prompt collection of data. Further, the customer who utilizes the remote control system can utilize the service at a low price during the period shortly after start of operation of the remote control system.

Furthermore, according to the aforementioned embodiment, in a case in which, for example, the manager of the remote control system desires to acquire the operation data of a particular device model, a formula is settable by which the evaluation value is calculated such that a high evaluation value is obtained for the operation data of this device model. For example, in a case in which acquisition of the operation data from an air conditioning system including an air conditioner of a device model for a cold weather region is desired, high compensation is given for provision of such operation data. Although an amount of data collectable from a cold weather region is small since a number of air conditioning systems in such a region is small due to sparse population, giving high compensation enables prompting a customer to provide data, enabling collecting a larger amount of data promptly.

Furthermore, according to the present embodiment, compensation for provision of data collected on a large scale can be automatically calculated and presented., thereby eliminating the need for analyzing the collected data by humans, and accordingly enabling low operational cost.

Furthermore, a wide variety of types of data is collectable in the remote control system according to the present embodiment, and thus using such types of data enables improving quality of service. Further, collecting a wide variety of types of data by using the data collection apparatus according to the present embodiment enables performing a high-accuracy market analysis based on the collected data, enabling development of a product having a high added value for customers.

Embodiment 2

A remote control system 1 according to Embodiment 2 is a system that collects additional data in addition to the operation data.

The remote control system 1 according to Embodiment 2 includes a data collection apparatus 100 and a control apparatus 200. The control apparatus 200 of Embodiment 2 has functions that are similar to those of the control apparatus 200 of Embodiment 1. The data collection apparatus 100 of Embodiment 2 has functions described below, in addition to the functions of the data collection apparatus 100 of Embodiment 1.

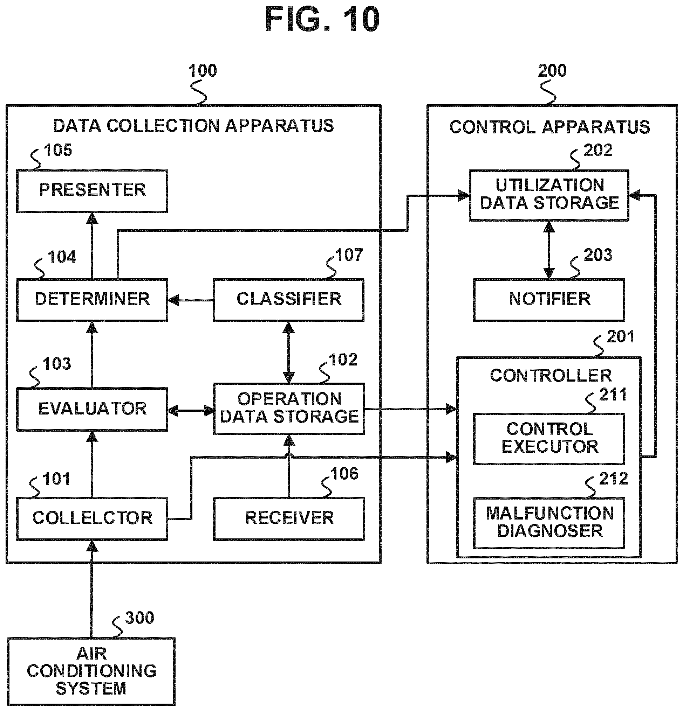

The functions of the data collection apparatus 100 of the present embodiment are described with reference to FIG. 10. The data collection apparatus 100 functionally includes a collector 101 that collects the operation data from each of the air conditioning systems 300, an operation data storage 102 that stores the operation data, an evaluator 103 that calculates an evaluation value indicating an evaluation of the operation data, a determiner 104 that determines compensation for provision of the operation data based on the evaluation value, a presenter 105 that presents the determined compensation, a receiver 106 that receives the additional data, and a classifier 107 that classifies the operation data.

The receiver 106 receives input of the additional data. The receiver 106 is achieved by cooperation between the processor 11 and the communicator 14. The receiver 106 is an example of receiving means.

The additional data is data to be associated with the operation data and is data that cannot be collected automatically from a facility device system as a remote control target, that is, cannot be collected in the manner of collecting the operation data. That is to say, the additional data is data that is unavailable without being input from the exterior. The input from the exterior may be performed manually or automatically. The additional data is, for example, an installation location of the air conditioner 310, building information of a building in which the air conditioning system 300 is constructed, and a use application of the air conditioning system 300. Examples of the installation location include an arrangement of indoor units within a floor, and an installation location of outdoor units. The installation location of the outdoor units is, for example, a location such as a roof, a veranda, and the ground. The building information includes an age, a size, an insulation performance, a piping length, a location and orientation of a window, or the like. The building information may be building information modeling (BMI) data. The use application is, for example, an item indicating an office, a shop, a hospital, or the like.

The receiver 106, upon receiving the input of the additional data, registers the additional data in the operation data storage 102 in association with the operation data. For example, in a case of receiving input of the building information of a real-estate property in which the air conditioning system 300 corresponding to the air conditioning system ID "0001" is constructed, the receiver 106 registers the inputted building information in the operation data storage 102 in association with the operation data of the air conditioning system 300 corresponding to the air conditioning system ID "0001".

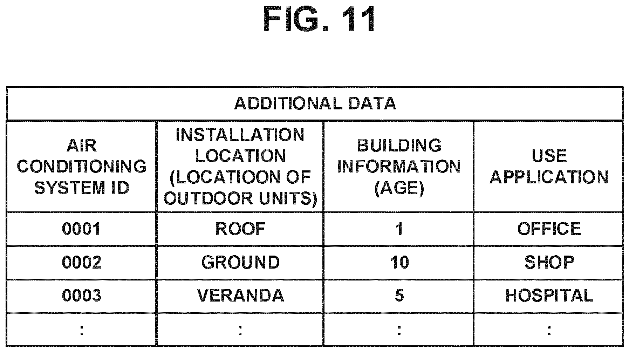

FIG. 11 illustrates an example of the additional data stored in the operation data storage 102. In the table of FIG. 11, an air conditioning system ID for identification of an air conditioning system 300, the installation location of the air conditioner 310, the building information of a real-estate property in which the air conditioning system 300 is constructed, and the use application of the real-estate property in which the air conditioning system 300 is constructed are registered in association with one another. In this example, the installation location of the air conditioner 310 is taken to be the installation location of the one or more outdoor units 312, and the building information is taken to be the age. The additional data is associated with the operation data of FIG. 4 using the air conditioning system ID as a key.

For example, the first line of the table of FIG. 11 indicates that the one or more outdoor units 312 of the air conditioning system 300 corresponding to the air conditioning system ID "0001" is installed on the "roof", the age of the real-estate property in which the air conditioning system 300 is constructed is "one year", and the use application of this real-estate property is the "office".

The classifier 107 classifies the operation data stored in the operation data storage 102 into one or more groups based on the values the operation data stored in the operation data storage 102. The classifier 107 performs the classification upon the determiner 104 determining that the additional data is added to the collected operation data. The classifier 107 is achieved by the processor 11. The classifier 107 is an example of classification means.

For example, clustering that is an example of unsupervised learning is employed to perform the classification of the operation data. Hereinafter, classification by employment of k-means clustering is described. Clusters obtained through the classification are taken to be the aforementioned "groups". First, the operation data stored in the operation data storage 102 is divided into data pieces that each are a data piece per unit time. Thereafter, evaluation items used for the classification are determined. In the present embodiment, the unit time is taken to be one hour, and the classification is performed based on the temperature sensor value and the pressure sensor value. Since the operation data is data measured every one minute, each of the data pieces obtained through the dividing by the unit time is representable by a multidimensional vector having dimensions of 60 (a number of pieces of measured data) $\times$ 2 (the temperature sensor value and the pressure sensor value).

For example, in the case in which the operation data storage 102 stores the operation data of the air conditioning system 300 corresponding to the air conditioning system ID "0002" for 1,000 hours, the air conditioning system 300 corresponding to the air conditioning system ID "0002" has 1,000 multidimensional vectors. As described above, the air conditioning system 300 has multiple multidimensional vectors for the operation data. The classifier 107 performs clustering of all of multidimensional vectors that all of the air conditioning systems 300 have and that are stored in the operation data storage 102.

Then the determiner 104 determines, from among the one or more groups obtained through the classification, a group to which the collected operation data belongs.

For example, the determiner 104 (i) calculates a distance between each of vectors of centroids of k clusters obtained by the k-means method and a vector indicating the collected operation data and (ii) determines a cluster having a centroid of which vector defines the shortest distance from the vector indicating the collected operation data to be the cluster to which the collected operation data belongs.

The determiner 104 obtains, for the pieces of the operation data included in the cluster determined to be the cluster to which the collected operation data belongs, an appending rate that is a rate of appending of the additional data. The appending rate is a ratio, to all of the pieces of the operation data included in the determined cluster, of pieces of the operation data to which the additional data is appended.

Then the determiner 104 corrects the compensation based on the appending rate, more specifically, obtains a corrected evaluation point based on Formula 2 below.

$$\text{Corrected evaluation point} = 1.0 - \text{Appending rate} \times (1.0 - \text{Evaluation point})$$

$$\cdots \text{(Formula 2)}$$

The corrected evaluation point obtained by Formula 2 above is closer to the evaluation point determined based on the accumulation amount of the operation data as the appending rate is higher, that is, as a rate of appending of the additional data to the pieces of the operation data included in the cluster to which the collected operation data belongs is higher. In contrast, the corrected evaluation point is higher as the rate of appending of the additional data to the pieces of the operation data included in the cluster to which the collected operation data belongs is lower. For example, the evaluation point corrected by Formula (2) above is, in the case in which the appending rate is 100%, a value that is the same as the evaluation point determined based on the accumulation amount of the operation data. In contrast, in the case in which the appending rate is 0%, the evaluation point is 1.

The presenter 105 presents the corrected evaluation point to the provider of the collected operation data. For example, in a case in which (i) the operation data from 8:00 to 9:00 on March 7, 2020, is collected from the air conditioning system 300 corresponding to the air conditioning system ID "0001" and (ii) the additional data is appended to the collected operation data, the presenter 105 sends, to the connection terminal 330 in the air conditioning system 300 corresponding to the air conditioning system ID "0001", a message including a value of the corrected evaluation point.

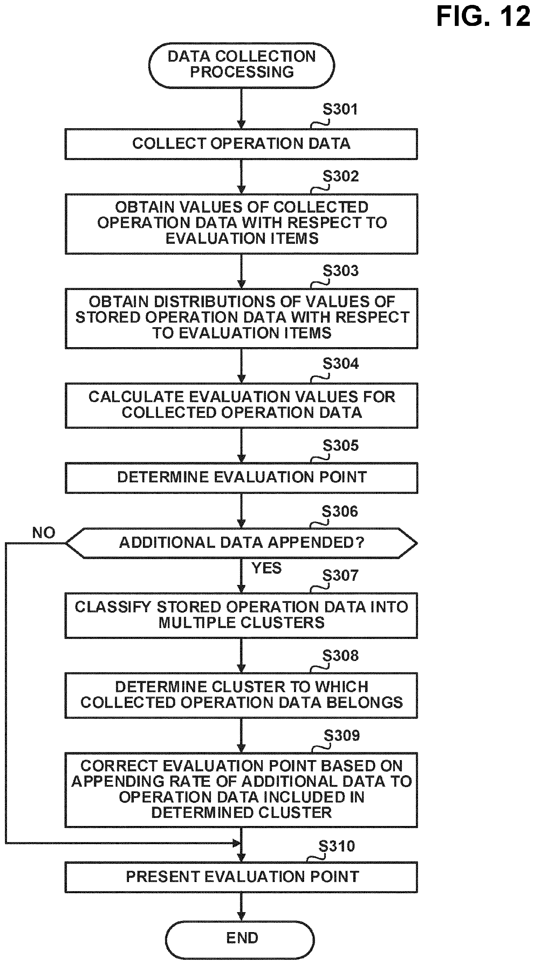

Next, data collection processing executed by the data collection apparatus 100 of the present embodiment is described with reference to the flowchart of FIG. 12. The data collection apparatus 100 executes, for example, the data collection processing of FIG. 12 in a one-hour period.

The processing in steps S301-S305 is similar to the processing of steps S101-S105 in the flowchart of FIG. 8.

The determiner 104 determines whether the additional data is appended to the collected operation data (step S306). Upon the determiner 104 determining that the additional data is appended to the collected operation data (YES in step S306), the classifier 107 classifies the operation data stored in the operation data storage 102 into multiple clusters based on the values of the operation data (step S307). Conversely, upon the determiner 104 determining that the additional data is not appended to the collected operation data (NO in step S306), the processing proceeds to step S310 and the presenter 105 presents the evaluation point obtained in step S305 (step S310).

Upon the operation data stored in the operation data storage 102 being classified into multiple clusters in step S307, the determiner 104 determines, based on a value of the collected operation data, from among the clusters obtained through the classification, a cluster to which the collected operation data belongs (step S308). The determiner 104 obtains the appending rate that is a rate of addition of the additional data to the operation data included in the determined cluster, and corrects the evaluation point based on the appending rate (step S309). Then the presenter 105 presents the corrected evaluation point (step S310).

According to the present embodiment, upon the collected operation data being operation data that belongs to a group in which a ratio of the operation data to which the additional data is appended is low and being operation data to which the additional data is appended, high compensation is determined for provision of the collected operation data. This configuration enables prompting appending of the additional data, enabling efficient collection of the additional data that is difficult to acquire automatically from the system.

Modified Examples

The aforementioned embodiments of the present disclosure may be modified and applied in various manners.

Although the data collection apparatus 100 and the control apparatus 200 of the aforementioned embodiments are taken to be connected via a network, this configuration is not limiting. One apparatus may double as the data collection apparatus 100 and the control apparatus 200. Further, a part or all of the elements included in the data collection apparatus 100 and the control apparatus 200 may be provided on a cloud server.

Although the evaluator 103 of the aforementioned embodiments obtains a distribution of the operation data with respect to each single evaluation item such as "operating time", such a distribution may be obtained with respect to a combination of multiple evaluation items. For example, a histogram may be obtained in which classes are set based on an item that is a combination of the "device model" and the "abnormality code". Further, for example, the accumulation amount of the operation data in an air conditioning system constructed in a general office is large whereas the accumulation amount of the operation data in an air conditioning system constructed in a general hospital ward is small. In such a case, creating a class representing a characteristic of hospital wards by combining multiple evaluation items enables efficiently collecting the operation data from hospital wards.

Furthermore, although the compensation is taken to be the evaluation point that can be used to discount a service utilization charge in the explanation in the aforementioned embodiments, the compensation is not limited thereto and may be, for example, cash, a ticket for a free on-site service in a case of malfunction, or a right to enjoy a more expensive remote control service.

Furthermore, although the evaluation point is corrected based only on the appending rate of the additional data only in the aforementioned embodiment, this configuration is not limiting, and a correction amount of the evaluation point may be changed according to a type of the additional data. For example, the correction amount is changed based on a utility value of the additional data, a degree of difficulty in acquiring the additional data, or the like. Specifically, for the operation data to which data that affects efficiency of an air conditioner, such as data relating to an insulation performance of a real-estate property, is appended, correction is performed such as heightening of the value of the evaluation point. Additionally, for the operation data to which data that changes depending on a status of use of a real-estate property, such as data of a number of residents in the real-estate property and a number of uses of the real-estate property, is appended, correction is performed such as heightening of the value of the evaluation point. This configuration enables defining the compensation according to a type of the additional data, enabling cost of compensation for the additional data that is lower than in a case in which fixed compensation is paid for any additional data.

Furthermore, although the data collection processing of FIG. 8 is executed in a one-hour period and the control processing of FIG. 9 is executed in a one-hour period upon ending of the data collection processing in the aforementioned embodiments, this configuration is not limiting. For example, each of the data collection processing of FIG. 8 and the control processing of FIG. 9 may be executed periodically at a predetermined timing.

Furthermore, the order of steps in the control processing executed by the control apparatus 200 in the aforementioned embodiments is not limited to the order of FIG. 9. For example, the order of step S201 and step S202 is reversible.

Furthermore, applying to an existing personal computer or to an existing information terminal device an operation program defining operations of the data collection apparatus 100 and the control apparatus 200 according to the aforementioned embodiments can allow the personal computer or the information terminal device to function as the data collection apparatus 100 and the control apparatus 200 according to the aforementioned embodiments.

Furthermore, such a program may be distributed by any method, for example, may be distributed by storing the program in a computer-readable recording medium, such as a compact disk read only memory (CD-ROM), a digital versatile disk (DVD) and a memory card, or may be distributed via a communication network such as the Internet.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

Industrial Applicability

According to the present disclosure, a data collection apparatus, a remote control system, a data collection method, and a program that enable efficiently collecting a wide variety of types of data from a facility device system can be provided.

Reference Signs List

1       Remote control system
11,21   Processor
12, 22  Main storage
13, 23  Auxiliary storage
14,24   Communicator
15,25   Inputter
16,26   Outputter
17,27   RTC

100     Data collection apparatus

| 101 | Collector |
|-----|-----------|
| 102 | Operation data storage |
| 103 | Evaluator |
| 104 | Determiner |
| 105 | Presenter |
| 106 | Receiver |
| 107 | Classifier |
| 200 | Control apparatus |
| 201 | Controller |
| 202 | Utilization data storage |
| 203 | Notifier |
| 211 | Control executor |
| 212 | Malfunction diagnoser |
| 300 | Air conditioning system |
| 310 | Air conditioner |
| 311 | Indoor unit |
| 312 | Outdoor unit |
| 320 | System controller |
| 330 | Connection terminal |
| 400 | Network |
| 500 | Image |

**Claims**

1. A data collection apparatus comprising:

   collection means for collecting operation data indicating an operation status of a facility device system;
   storage means for storing the operation data;
   evaluation means for calculating an evaluation value indicating an evaluation of the collected operation data based on a comparison between the collected operation data and the stored operation data;
   determination means for determining, based on the evaluation value, compensation for provision of the collected operation data; and
   presentation means for presenting the determined compensation to a provider of the collected operation data.

2. The data collection apparatus according to claim 1, wherein the evaluation means obtains a distribution of the stored operation data with respect to a predetermined evaluation item, and calculates for the collected operation data an evaluation value that is higher as an amount of the operation data included in a class of the distribution to which the collected operation data belongs is smaller.

3. The data collection apparatus according to claim 1 or 2, further comprising:

   receiving means for receiving input of additional data, the additional data being data to be associated with the operation data and being data that is uncollectible in a manner of automatic collection from the facility device system; and
   classification means for classifying, in a case in which the collected operation data is stored in association with the additional data, the stored operation data into one or more groups based on a value of the stored operation data, wherein
   the determination means (i) determines, from among the one or more groups, a group to which the collected operation data belongs, (ii) obtains an appending rate that is a rate of addition of the additional data to the operation data included in the determined group, and (iii) corrects the compensation based on the appending rate, and
   the presentation means presents the corrected compensation.

4. The data collection apparatus according to any one of claims 1 to 3, wherein

   the facility device system is an air conditioning system including an air conditioner, and
   the operation data is data indicating an operation status of the air conditioner.

5. A remote control system including (i) a data collection apparatus to collect operation data indicating an operation status from a facility device system and (ii) a control apparatus to execute remote control of the facility device system, wherein

   the data collection apparatus includes

   collection means for collecting the operation data,
   storage means for storing the operation data,
   evaluation means for calculating an evaluation value indicating an evaluation of the collected operation data based on a comparison between the collected operation data and the stored operation data, and
   determination means for determining, based on the evaluation value, compensation for provision of the collected operation data, and

   the control apparatus includes

   control means for executing the remote control based on the collected operation data, and
   notification means for obtaining, with reference to the compensation, cost that is required for execution of the remote control, and sending notification of the cost to a provider of the operation data.

6. A data collection method comprising:

   collecting, by collection means, operation data indicating an operation status of a facility device system;
   calculating, by evaluation means, an evaluation value indicating an evaluation of the collected operation data based on a comparison between the collected operation data and operation data stored in storage means;
   determining, by determination means, based on the evaluation value, compensation for provision of the collected operation data; and
   presenting, by presentation means, the determined compensation to a provider of the collected operation data.

7. A program for causing a computer to function as:

   collection means for collecting operation data indicating an operation status of a facility device system;
   evaluation means for calculating an evaluation value indicating an evaluation of the collected operation data based on a comparison between the collected operation data and operation data stored in storage means;
   determination means for determining, based on the evaluation value, compensation for provision of the collected operation data; and
   presentation means for presenting the determined compensation to a provider of the collected operation data.

# FIG. 1

# FIG. 2

100,
200

DATA COLLECTION APPARATUS/CONTROL APPARATUS

11,21 PROCESSOR ⟷ COMMUNICATOR 14, 24

12, 22 MAIN STORAGE ⟷ INPUTTER 15, 25

13, 23 AUXILIARY STORAGE ⟷ OUTPUTTER 16, 26

RTC 17, 27

18,28

# FIG. 3

100

**DATA COLLECTION APPARATUS**

105

PRESENTER

104

DETERMINER

103

EVALUATOR

102

OPERATION
DATA STORAGE

101

COLLELCTOR

300

AIR
CONDITIONING
SYSTEM

200

**CONTROL APPARATUS**

202

UTILIZATION
DATA STORAGE

203

NOTIFIER

201

CONTROLLER

211

CONTROL
EXECUTOR

212

MALFUNCTION
DIAGNOSER

# FIG. 4

| OPERATION DATA (AIR CONDITIONING SYSTEM ID "0001") | | | | | | | | | |
|---|---|---|---|---|---|---|---|---|---|
| DEVICE MODEL | SYSTEM SCALE | DATE AND TIME | TEMPERA-TURE SETTING [℃] | TEMPERA-TURE SENSOR VALUE [℃] | PRESSURE SENSOR VALUE [Pa] | USED FUNCTION | OPERA-TION MODE | ABNOR-MALITY CODE | ELECTRIC POWER CONSUMPTION AMOUNT [KWH] |
| A11-1 | INDOOR UNITS: 12 OUTDOOR UNITS: 2 | 2019/7/1 8:00 | 26 | 26.5 | 12.0 | FUNCTION A | COOLING | ABSENT | 0.1 |
| | | 2019/7/1 8:01 | 26 | 26.5 | 12.0 | FUNCTION A | COOLING | ABSENT | 0.2 |
| | | 2019/7/1 8:02 | 26 | 26.6 | 12.1 | FUNCTION A | COOLING | ABSENT | 0.2 |
| | | 2019/7/1 8:03 | 26 | 26.6 | 12.1 | FUNCTION A | COOLING | ABSENT | 0.3 |
| | | 2019/7/1 8:04 | 26 | 26.7 | 12.2 | FUNCTION A | COOLING | ABSENT | 0.3 |
| | | : | : | : | : | : | : | : | : |
| | | 2019/7/2 8:00 | 26 | 26.2 | 12.0 | FUNCTION B | COOLING | ABSENT | 0.2 |
| | | 2019/7/2 8:01 | 26 | 26.1 | 11.9 | FUNCTION B | COOLING | CODE A | 0.1 |
| | | 2019/7/2 8:01 | 26 | 26.1 | 11.9 | FUNCTION B | COOLING | CODE A | 0.1 |
| | | : | : | : | : | : | : | : | : |

EP 4 145 378 A1

# FIG. 5

NUMBER OF SAMPLES

X1

0

5000

45000

OPERATING TIME

# FIG. 6

| UTILIZATION DATA | | | |
|---|---|---|---|
| AIR CONDITIONING SYSTEM ID | UTILIZATION TIME | UTILIZATION CHARGE (YEN) | EVALUATION POINT |
| 0001 | 2020/3/7 8:00 - 2020/3/7 9:00 | 10 | 0.4 |
| | 2020/3/7 7:00 - 2020/3/7 8:00 | 10 | 0.4 |
| | 2020/3/7 6:00 - 2020/3/7 7:00 | 10 | 0.3 |
| | 2020/3/7 5:00 - 2020/3/7 6:00 | 10 | 0.3 |
| | : | : | : |
| 0002 | 2020/3/7 8:00 - 2020/3/7 9:00 | 20 | 0.7 |
| | 2020/3/7 7:00 - 2020/3/7 8:00 | 20 | 0.6 |
| | : | : | : |
| : | : | : | : |

# FIG. 7

500

INFORMATION RELATING TO REMOTE CONTROL

UTILIZATION TIME: FROM 2020/3/7 8:00 TO 2020/3/7 9:00

CONTENT OF CONTROL: ELECTRIC-LOAD LEVELING
CONTROL

MALFUNCTION DIAGNOSIS: NO MALFUNCTION

SERVICE UTILIZATION CHARGE: 10 YEN

EVALUATION POINT: 0.4

BILLING AMOUNT: 6 YEN

# FIG. 8

```
        DATA COLLECTION
          PROCESSING

                  │ S101
                  ▼
   ┌──────────────────────────────┐
   │    COLLECT OPERATION DATA     │
   └──────────────────────────────┘
                  │ S102
                  ▼
   ┌──────────────────────────────┐
   │   OBTAIN VALUES OF COLLECTED  │
   │ OPERATION DATA WITH RESPECT TO│
   │       EVALUATION ITEMS        │
   └──────────────────────────────┘
                  │ S103
                  ▼
   ┌──────────────────────────────┐
   │ OBTAIN DISTRIBUTIONS OF VALUES OF│
   │STORED OPERATION DATA WITH RESPECT│
   │      TO EVALUATION ITEMS      │
   └──────────────────────────────┘
                  │ S104
                  ▼
   ┌──────────────────────────────┐
   │ CALCULATE EVALUATION VALUES FOR│
   │   COLLECTED OPERATION DATA    │
   └──────────────────────────────┘
                  │ S105
                  ▼
   ┌──────────────────────────────┐
   │   DETERMINE EVALUATION POINT  │
   └──────────────────────────────┘
                  │ S106
                  ▼
   ┌──────────────────────────────┐
   │   PRESENT EVALUATION POINT    │
   └──────────────────────────────┘
                  │
                  ▼
               END
```

# FIG. 9

CONTROL
PROCESSING

S201

TRANSMIT CONTENT OF CONTROL BASED
ON COLLECTED OPERATION DATA

S202

PERFORM MALFUNCTION DIAGNOSIS OF
COLLECTED OPERATION DATA

S203

OBTAIN BILLING AMOUNT BASED ON
UTILIZATION DATA

S204

SEND NOTIFICATION OF INFORMATION
RELATING TO REMOTE CONTROL

END

# FIG. 10

# FIG. 11

| ADDITIONAL DATA | | | |
|---|---|---|---|
| AIR CONDITIONING SYSTEM ID | INSTALLATION LOCATION (LOCATIOON OF OUTDOOR UNITS) | BUILDING INFORMATION (AGE) | USE APPLICATION |
| 0001 | ROOF | 1 | OFFICE |
| 0002 | GROUND | 10 | SHOP |
| 0003 | VERANDA | 5 | HOSPITAL |
| : | : | : | : |

**FIG. 12**

```
         ┌─────────────────────┐
         │   DATA COLLECTION   │
         │     PROCESSING      │
         └─────────────────────┘
                   │
                   ▼        S301
    ┌────────────────────────────────┐
    │     COLLECT OPERATION DATA     │
    └────────────────────────────────┘
                   │
                   ▼        S302
    ┌────────────────────────────────┐
    │     OBTAIN VALUES OF COLLECTED │
    │  OPERATION DATA WITH RESPECT TO│
    │        EVALUATION ITEMS        │
    └────────────────────────────────┘
                   │
                   ▼        S303
    ┌────────────────────────────────┐
    │  OBTAIN DISTRIBUTIONS OF VALUES OF │
    │ STORED OPERATION DATA WITH RESPECT │
    │        TO EVALUATION ITEMS     │
    └────────────────────────────────┘
                   │
                   ▼        S304
    ┌────────────────────────────────┐
    │  CALCULATE EVALUATION VALUES FOR │
    │    COLLECTED OPERATION DATA    │
    └────────────────────────────────┘
                   │
                   ▼        S305
    ┌────────────────────────────────┐
    │   DETERMINE EVALUATION POINT   │
    └────────────────────────────────┘
                   │
                   ▼        S306
NO   ◁────────────────────────────────▷
     │     ADDITIONAL DATA APPENDED?  │
                   │
                  YES      S307
                   ▼
    ┌────────────────────────────────┐
    │ CLASSIFY STORED OPERATION DATA INTO │
    │        MULTIPLE CLUSTERS       │
    └────────────────────────────────┘
                   │
                   ▼        S308
    ┌────────────────────────────────┐
    │    DETERMINE CLUSTER TO WHICH  │
    │ COLLECTED OPERATION DATA BELONGS │
    └────────────────────────────────┘
                   │
                   ▼        S309
    ┌────────────────────────────────┐
    │ CORRECT EVALUATION POINT BASED ON │
    │ APPENDING RATE OF ADDITIONAL DATA TO │
    │  OPERATION DATA INCLUDED IN    │
    │      DETERMINED CLUSTER        │
    └────────────────────────────────┘
                   │
                   ▼        S310
    ┌────────────────────────────────┐
    │    PRESENT EVALUATION POINT    │
    └────────────────────────────────┘
                   │
                   ▼
              ┌─────────┐
              │   END   │
              └─────────┘
```

**INTERNATIONAL SEARCH REPORT**

| International application No. |
| --- |
| PCT/JP2020/017931 |

A.  CLASSIFICATION OF SUBJECT MATTER
Int.Cl.  G06Q50/10(2012.01)i
FI: G06Q50/10

According to International Patent Classification (IPC) or to both national classification and IPC

B.  FIELDS SEARCHED

Minimum documentation searched (classification system followed by classification symbols)
Int.Cl.  G06Q50/10

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2002-106930 A (MITSUBISHI ELECTRIC CORPORATION) 10 April 2002 (2002-04-10), paragraphs [0001]–[0111] | 1-7 |
| Y | JP 2019-28836 A (MITSUBISHI HITACHI POWER SYSTEMS LTD.) 21 February 2019 (2019-02-21), paragraphs [0001]-[0108] | 1-7 |
| Y | JP 2019-219952 A (Z HOLDINGS CORP.) 26 December 2019 (2019-12-26), paragraphs [0001]-[0139] | 1-7 |
| A | JP 2019-8453 A (HITACHI, LTD.) 17 January 2019 (2019-01-17), entire text | 1-7 |
| A | JP 2009-175980 A (NTT DOCOMO, INC.) 06 August 2009 (2009-08-06), entire text | 1-7 |

☐  Further documents are listed in the continuation of Box C.          ☒  See patent family annex.

| | |
| --- | --- |
| *      Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search<br>03 September 2020 | Date of mailing of the international search report<br>15 September 2020 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

International application No.

PCT/JP2020/017931

| | | |
|---|---|---|
| JP 2002-106930 A | 10 April 2002 | (Family: none) |
| JP 2019-28836 A | 21 February 2019 | (Family: none) |
| JP 2019-219952 A | 26 December 2019 | (Family: none) |
| JP 2019-8453 A | 17 January 2019 | (Family: none) |
| JP 2009-175980 A | 06 August 2009 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001357113 A